Europäisches Patentamt

European Patent Office

Office européen des brevets

(11) Publication number: **0 041 369**
**B1**

(12) EUROPEAN PATENT SPECIFICATION

(45) Date of publication of patent specification: 20.02.85

(21) Application number: 81302361.1

(22) Date of filing: 28.05.81

(51) Int. Cl.⁴: **B 01 J 7/00, F 42 B 3/04, B 60 R 21/18, B 60 R 21/26**

(54) A gas generator for inflating an inflatable device.

(30) Priority: 03.06.80 US 152921

(43) Date of publication of application:
09.12.81 Bulletin 81/49

(45) Publication of the grant of the patent:
20.02.85 Bulletin 85/08

(84) Designated Contracting States:
DE FR GB IT

(56) References cited:
DE-A-2 262 346
DE-A-2 350 104
DE-A-2 364 534
US-A-3 404 532
US-A-3 532 358
US-A-3 532 359
US-A-3 532 360
US-A-3 692 495
US-A-3 905 615
US-A-3 948 541
US-A-4 005 876

(73) Proprietor: MORTON THIOKOL, INC.
110 North Wacker Drive
Chicago, Illinois 60606 (US)

(72) Inventor: Adams, Gary V.
2420 S. 400 West
Brigham City Utah 84302 (US)
Inventor: Schneiter, Fred E.
2868 N. 150 W.
Ogden Utah 84404 (US)

(74) Representative: Warren, Anthony Robert et al
BARON & WARREN 18 South End Kensington
London W8 5BU (GB)

Courier Press, Leamington Spa, England.

## Description

This invention relates to gas generators of a compact size and light weight for supplying a gas to inflate inflatable devices or structures such as an inflatable safety cushion apparatus that is attachable to passive belt type restraints used in various vehicles including aircraft.

Various forms of restraints have been proposed in the prior art for the protection of vehicle occupants. Specifically, there have been provided inflatable seat belt shoulder harness systems, and inflatable air bag systems. Inflatable belt and harness systems and inflatable air bag systems are designed to provide a greater degree of protection than the conventional seat belt and shoulder harness systems are capable of for the vehicle occupants.

The inflatable restraint systems of the prior art are complex and expensive, and are characterized by their longer than desirable "reaction time", that is the length of time required for inflation and effective constraining action on the user upon a crash impact. Additionally, the prior art inflatable restraint systems depend on the surrounding structure for functional support and are best suited for installation at the time of manufacture of the vehicle. Among the reasons for this is that the inflatable belt systems require, in addition to the use of a special inflatable belt, the mounting in the vehicle, of a pressurized gas supply or inflator that is connected to the inflatable belt by an elongated tube or pipe. The inflatable air bag systems involve mounting in the steering wheel hub and/or in the dashboard of the vehicle of a folded and compacted air bag that is inflatable to a relatively large volume, and a pressurized gas supply or gas generator.

With prior art inflatable belt-type restraint systems, the time required to transport the inflation gas from a remote source results in an undesirable delay in the inflation of the inflatable belt. This extends the reaction time of the system beyond a value that is optimum for protection of the user in the most comfortable manner. The relatively larger volume of the air bag, and the relatively large distance between the folded and compacted bag and the user that must be traversed by the inflatable bag, upon a crash impact, to constrain the user also cause the reaction time of the inflatable air bag restraint systems to be longer than desirable. As a consequence, for both the inflatable belt and the inflatable air bag restraint systems of the prior art as proposed for use in automotive vehicles, the longer than desirable reaction time upon a crash impact tends to allow some movement of the user to occur, thus exposing the user to an undesirable shock of sudden, hard constraint.

There thus exists a need in the art for not only an improved restraint for the protection of the occupants of vehicles involved in crashes, but a need for an improved gas generator for supplying the gas to such a device in a rapid and direct manner.

There further exists a need for a compact, lightweight and effective gas generator to be used inside a safety cushion of the type described in our copending EP—A—0041368.

Some gas generators which are located in their entirety within the inflatable bladder of an inflatable body and head restraint are shown in patents 3,905,615 to Schulman issued September 16, 1975 and in patent 3,948,541 to Schulman issued April 6, 1976. These do not however, solve the problem of compactness, lightness of weight and of a shape to provide maximum comfort and safety to the user.

Gas generators in the art have generally been cylindrical with the propellant about some central core in either a doughnut shape, concentric cylinders or discs. Such an arrangement tends to make them too bulky and too thick for use with safety cushions applied to safety harnesses.

It is an object of the present invention to provide a gas generator which is capable of being located on a support strap of a safety harness of a vehicle restraint within a safety cushion, which is capable of inflating the safety cushion in an acceptably rapid time, and is capable of being made as a relatively compact flat unit without protrusions which might be uncomfortable or dangerous to the user of the cushion.

According to one aspect of the present invention, there is provided a gas generator for inflating an inflatable device wherein the generator comprises a body which is relatively thin in one direction and contains an igniter and a combustion chamber, the combustion chamber containing combustible gas generating propellant and having an outlet, and the igniter being provided with ignition means, characterised in that the igniter and the combustion chamber are arranged in substantially coplanar side-by-side relationship with communication therebetween, and in that the combustion chamber has a longitudinal axis which is perpendicular to the direction in which the body is relatively thin.

According to another aspect of the present invention, there is provided a gas generator located on a support strap of a safety harness of a vehicle restraint within a safety cushion thereof for inflating said safety cushion, said gas generator being characterised by:

a body having the form of a relatively thin, flat rectangular package and including plural side-by-side, elongated combustion chambers having longitudinal axes which lie in a common plane and extend substantially parallel to the sides of said rectangular package having the longer dimensions, each of said combustion chambers being filled with gas generating material and including filtering, cooling and ph-adjusting screens, said generator body further including an igniter having a longitudinal axis lying in the common plane in which the longitudinal axes of said combustion chambers lie, the igniter being arranged in side-by-side relation with, and in operative communicating relation with, at least two of said chambers, each of said chambers having an outlet formed in said generator body, said outlet being in direct communication with the interior of said cushion for inflating said cushion; and

ignition means for said igniter.

A gas generator or inflator embodying the present invention is capable of inflating a safety cushion with an innocuous gas such as nitrogen and is, in use, entirely enclosed in the safety cushion. The inflator is attached to suitable sensor apparatus that detects and responds to crash impacts of the vehicle in which it is installed. In order to achieve a desirable compactness, and in particular, a flat, slim configuration suitable for attachment to the safety harness between it and the occupant, in one embodiment, the inflator has dual side-by-side combustion chambers having longitudinal axes that lie in a common plane. The combustion chambers are filled with gas generant material that is ignitable by a central common igniter located between them and also in side-by-side relationship with them thus providing a very flat, compact and safety shaped package for the gas generator which is at the same time capable of efficient and quick gas generation in sufficient quantity but in minimum size. The inflator contains appropriate filters and cooling means, and is capable of inflating the safety cushion within about 15 milliseconds. Such rapid inflation of the safety cushion apparatus contributes importantly to the attainment of a desirably short reaction time.

In order that the invention may be more readily understood reference will now be made to the accompanying drawings, in which:—

Figure 1 is a longitudinal cross section of a gas generator embodying the present invention showing its interior and the location of the gas generating material and filters;

Figure 2 is a transverse cross section of the gas generator taken on lines 2—2 of Figure 1 looking in the direction of the arrows;

Figure 3 is a view of a restraining harness showing the location of an inflated safety cushion and the location of the gas generator with respect to it;

Figure 4 is a cross sectional view of the safety cushion in its uninflated, folded condition taken on lines 4—4 of Figure 3 looking in the direction of the arrows and showing the gas generator inside the bag; and

Figure 5 is a side external view of a portion of the restraining harness showing the location of the gas generator within the safety cushion.

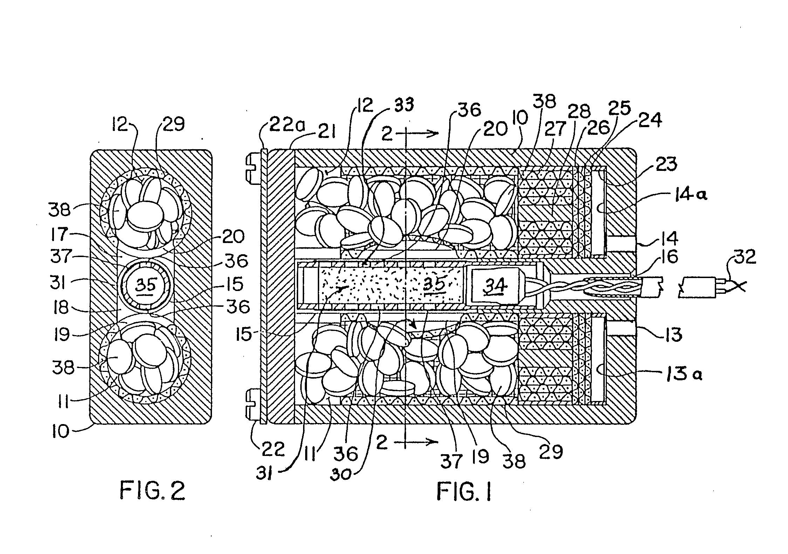

With particular reference to Figures 1 and 2 of the drawings, the gas generator includes a solid body 10 which is provided with two longitudinal chambers or cavities 11, 12 having longitudinal axes that lie in a common plane and that extend substantially parallel to the sides of the body 10 having the longer dimension. The chambers 11 and 12 are closed at their right hand end in Figure 1 except for outlet ports 13, 14 which are sealed by aluminum foil seals 13a, 14a. In between chambers 11, 12 is a third chamber or cavity 15 having an opening 16 at its right hand end in Figure 1. Chamber 15 is open at its left hand end in Figure 1, is of somewhat smaller diameter than the bores 11, 12 and has large elongated ports 17, 18 through its sides corresponding with and in communicating relation with similar ports 19, 20 respectively, through the side walls of chamber 11, 12 to afford communication from chamber 15 into chambers 11, 12. All three chambers are arranged in coplanar side-by-side relationship as shown in the drawings in order to afford as thin and compact a package as possible suitable for use between a person's body and a safety harness as mentioned previously in this specification and to provide a minimum size for a maximum gas output. A cover or end plate 21 is provided which covers the open end of the chamber bores 11, 12 and 15 and is held tightly in place by means of screws 22 which also provide an attachment means for a mounting bracket 22a. The mating surfaces of body 10 and cover 21 are each machined to provide a substantially flat surface and a coating of an epoxy compound is applied between them at the time of assembly to prevent any leakage of gases.

Before cover 21 is put in place, however, chamber 11, 12 are both filled with filtering material and gas-generating propellant in the following manner. A spacer ring 23 is placed in each chamber 11, 12 followed by disc-like stainless steel filter screens 24, 25, screen 25 being of a fine mesh and screen 24 of a coarser mesh with screen 24 to the right of screen 25 in Figure 1 in a position downstream of the flow of gases from chambers 11 and 12. To the left of screen 25 (upstream) is a porous layer or layered screen 26 of pH adjusting material such as ferrous sulfate. Just upstream of layer 26 (to its left in Figure 1) is another stainless steel filter screen 27 which is spirally wrapped on a pin 28 and inserted as a unit during assembly of the gas generator. Still another stainless steel filter screen 29 is provided about the inner wall of each chamber 11, 12 with a suitable opening 30 provided in each as shown to provide easy communication with the igniter cavity 15 through ports 19, 20 and 17, 18. Screen 29 is several layers thick but leaves most of the volume of chambers 11, 12 open to receive gas generant. This gas generant comprises pellets 38 which substantially fill the remaining space in each of chambers 11, 12 with the pellets 38 made of a typical formulation for gas generants such as about 70 per cent sodium azide ($NaN_3$), 28 percent molybdenum disulfide ($MoS_2$) and 2 percent sulfur. Both chambers 11, 12 are filled with these pellets 38 after igniter 31 is put in place in cavity 15. Its connecting wires 32 pass out of the gas generator through opening 16 from where they are connected to an inflation initiator or sensor (not shown) associated with the harness and the vehicle to which it is attached and which responds to crash impacts.

The igniter 31 is of a type customarily employed in the ignition of gas generators and comprises a tubular shell 33 which contains an electrically operated squib 34 and fast burning igniter material 35. Shell 33 is perforated as shown at 36 to afford communication with chambers 11, 12 and the perforations are covered with easily destructible tape 37 on its exterior to protect the contents during handling and installation into cavity 15.

The gas generator is then ready to be closed and end plate or cover 21 is fastened in place by means of screws 22 which also pass through bracket 22a to hold it in place. Epoxy compound is applied, as mentioned previously in this specification, to the mating surfaces of body 10 and end plate 21 to act as a sealing compound. The gas generator unit is then put in place inside the safety cushion 39 with the whole assembly attached to the harness and enclosed in a protective cover 42 with the safety cushion 39 folded inside of it. The cover 42 is closed and fastened by a suitable pull-apart fastener.

As mentioned previously in this specification, the gas generator is made to function on receipt of a signal from a sensor (not shown) which detects that the vehicle with which it is associated has been involved in a collision. This signal to the gas generator is in the form of an electric impulse to the igniter 31 which causes ignition of squib 34. This action in turn causes ignition of the igniter material 35 which burns very rapidly and destroys or blows off tape 37 after which its flame and high temperature gases pass out through perforations 36 into chambers 11, 12 and ignite the gas generant pellets 38. As these burn, gas is generated which, because of its high pressure, forces its way through the various filter screens, ruptures the aluminum foil seals 13a, 14a and flows to outlet openings 13, 14 from which it enters directly into the surrounding inflatable bag or can be conducted to such an inflatable located nearby. The generated gas first encounters screen 29 where cooling of the gas takes place to some extent and some relatively large pieces of gas generating material become trapped before they enter, or interfere with the operation of, the remaining screens. Next the gas passes through spirally wrapped screen 27 where additional material is filtered out and additional cooling of the gas occurs. The gas then passes through the porous layer 26 of pH adjusting material which changes the pH value of the gas to neutralize it to an acceptable value after which the gas passes through screens 25, 24 to the outlets 13, 14. The spacer ring 23 serves to keep the filter screen 24 off the end walls of chambers 11, 12 so that the outlets 13, 14 will not become blocked. This entire action takes place very rapidly so that the safety cushion 39 becomes totally inflated within about 15 milliseconds.

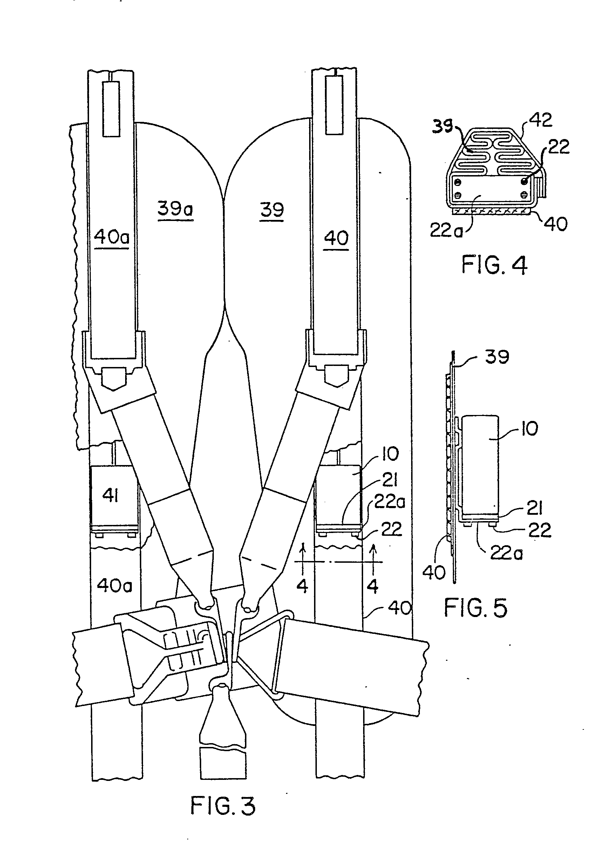

The entire gas generator is located within a safety cushion 39 applied to a safety harness 40 as shown in Figures 3, 4 and 5 in the manner shown in the co-pending European Patent Application mentioned earlier in this specification. As gas is generated, it flows directly into cushion 39 as stated above, and fully inflates it within about 15 milliseconds with the overall reaction time of the whole system including operation of the sensor taking not more than about 20 to 25 milliseconds.

A gas generator is ordinarily used for each safety cushion. In connection with the safety harness 40 shown in Figure 3, a second identical gas generator 41 is used to inflate a matching safety cushion for the second upright strap of a shoulder harness 40a (the left hand strap in Figure 3). Others could be used in other locations between the strap and the body of the occupant where an additional cushion is needed. From the foregoing, it will be seen that there is provided a particularly advantageous construction of gas generator, wherein gas generation chambers and an igniter are arranged in a side-by-side coplanar relationship. A maximum of gas is generated by minimum size and dimension of the gas generator housing, and the generated gas released from the generating unit is cool and clean enough so as not to create a hazard to the person using the equipment and to the equipment itself. The gas generator is lightweight, and can be disassembled easily and recharged for further use.

**Claims**

1. A gas generator for inflating an inflatable device wherein the generator comprises a body (10) which is relatively thin in one direction and contains an igniter (31) and a combustion chamber (11), the combustion chamber containing combustible gas generating propellant (38) and having an outlet (13), and the igniter (31) being provided with ignition means (34), characterised in that the igniter (31) and the combustion chamber (11) are arranged in substantially coplanar side-by-side relationship with communication (18) therebetween, and in that the combustion chamber (11) has a longitudinal axis which is perpendicular to the direction in which the body (10) is relatively thin.

2. The generator claimed in claim 1, including two combustion chambers (11, 12) in substantially coplanar side-by-side relationship with the igniter (31), the igniter being interposed between and operatively communicating with the combustion chambers, and the combustion chambers (11, 12) and igniter (31) having generally mutually parallel longitudinal axes.

3. The generator claimed in claim 2, wherein the longitudinal axes of the combustion chambers (11, 12) lie in a common plane with the longitudinal axis of an igniter chamber (15) containing the igniter (31), said common plane being generally parallel to the planes of the surfaces of the body (10) which define the thin dimension of the body.

4. The generator claimed in claim 2 or 3, including a filter (24, 25) in each combustion chamber (11, 12) adjacent the outlet (13, 14).

5. The generator claimed in claim 4, including a neutralizer (26) in each combustion chamber (11, 12) adjacent the filter (24, 25).

6. The generator claimed in any of claims 2 to 5, wherein the combustion chambers (11, 12) and an igniter chamber (15) containing the igniter (31) are each in the form of a cylindrical chamber contained in a common body (10).

7. The generator claimed in claim 6, wherein the body (10) includes a removable cap (21) covering the open ends of each of the combustion chambers (11, 12) and the igniter chamber (15).

8. The generator claimed in any preceding claim in combination with an inflatable device comprising a safety cushion (39), wherein said generator is located in its entirety within said cushion.

9. The generator claimed in claim 8, mountable or mounted on a support strap of a safety harness (40) of a vehicle restraint.

10. A gas generator located on a support strap of a safety harness (40) of a vehicle restraint within a safety cushion (39) thereof for inflating said safety cushion, said gas generator being characterised by:

a body (10) having the form of a relatively thin, flat rectangular package and including plural side-by-side, elongated combustion chambers (11, 12) having longitudinal axes which lie in a common plane and extend substantially parallel to the sides of said rectangular package having the longer dimensions, each of said combustion chambers being filled with gas generating material (38) and including filtering, cooling and ph-adjusting screens (27, 29, 26), said generator body (10) further including an igniter (31) having a longitudinal axis lying in the common plane in which the longitudinal axes of said combustion chambers (11, 12) lie, the igniter (31) being arranged in side-by-side relation with, and in operative communicating relation with at least two of said chambers (11, 12), each of said chambers having an outlet (13, 14) formed in said generator body, said outlet being in direct communication with the interior of said cushion (39) for inflating said cushion; and

ignition means (34) for said igniter (31).

11. The generator claimed in claim 10, in which the combustion chambers (11, 12) are dual chambers and the igniter (31) is centrally located between said dual chambers.

12. The generator claimed in claim 10 or 11, in which said body (10) further includes a removable cap (21) for closing one end of said chambers (11, 12) and an end of an igniter chamber (15) containing said igniter (31).

13. The generator claimed in claim 10, 11 or 12, further including means (22a) for mounting said generator in said safety cushion (39) when locating said generator within said cushion on said harness strap (40).

14. The generator claimed in any of claims 10 to 13, in which each of said combustion chambers (11, 12) includes an elongated port (19, 20) that extends substantially parallel to the longitudinal axes of said combustion chambers,

in which said igniter (31) is an electrically activated type having electrical connecting wires (32) for the activation thereof,

in which said body (10) includes an elongated igniter chamber (15) for said igniter (31) that is located in between said combustion chambers with the longitudinal axis thereof substantially parallel to the longitudinal axes of said combustion chambers, said igniter chamber (15) including an elongated port (17, 18) on each of the opposite sides thereof with one of said igniter chamber ports (17) being disposed in contiguous relation with one of said combustion chamber ports (20) and the other of said igniter chamber ports (18) disposed in contiguous relation with the other one of said combustion chamber ports (19) to afford communication between said igniter chamber and said combustion chambers,

including a plate (21) to cover one end of the combustion and igniter chambers, the outlets (13, 14) for each of said combustion chambers being at the other ends thereof, and

further including an opening (16) at the other end of said igniter chamber (15) through which said electrical connecting wires (32) may pass out of said body (10) for connection to said electrical means.

### Revendications

1. Générateur de gaz pour gonfler un dispositif gonflable comportant un corps (10) relativement mince dans l'une des ses directions qui contient un détonateur (31) et une chambre de combustion (11), le détonateur (31) étant relié à des moyens de mise à feu (34), et la chambre de combustion contenant un propulseur engendrant un gaz combustible (38) et ayant une sortie (13), caractérisé en ce que le détonateur (31) et la chambre de combustion sont disposés côte à côte sensiblement dans un même plan et reliés par une communication (18) et en ce que l'axe longitudinal de la chambre de combustion (11) est perpendiculaire à la direction suivant laquelle le corps (10) est relativement mince.

2. Générateur selon la revendication 1, comportant deux chambres de combustion (11, 12) situées sensiblement dans le même plan que le détonateur (31) et jouxtant celui-ci; le détonateur étant placé entre elles et possédant une communication efficace avec chacune d'elles; le détonateur (31) et les chambres de combustion (11, 12) ayant généralement des axes longitudinaux parallèles.

3. Générateur selon la revendication 2 où les axes longitudinaux des chambres de combustion (11, 12) sont dans le même plan que l'axe longitudinal de la chambre de détonateur (15) contenant le détonateur (31), ce même plan étant généralement parallèle aux surfaces du corps (10) correspondant à la direction selon laquelle le corps est mince.

4. Générateur selon l'une des revendications 2 ou 3 comportant un filtre (24, 25) dans chaque chambre de combustion (11, 12) et jouxtant leur sortie (13, 14).

5. Générateur selon la revendication 4 comportant un neutralisateur (26) dans chaque chambre de combustion (11, 12) et jouxtant le filtre (24, 25).

6. Générateur selon l'une des revendications 2 à 5 où les chambres de combustion (11, 12) et la chambre de détonateur (15), contenant le détonateur (31), sont de forme cylindrique et sont contenues dans un corps commun (10).

7. Générateur selon la revendication 6 où le corps (10) comporte un couvercle amovible (21) fermant la partie ouverte des chambres de combustion (11, 12) et de la chambre de détonateur (15).

8. Générateur selon l'une des revendications précédentes combiné avec un dispositif gonflable comportant un coussin de sécurité (39) dans lequel ledit générateur est totalement logé.

9: Ensemble selon la revendication 8, caractérisé en ce qu'il est montable ou monté sur la courroie de support du harnais de sécurité (40) d'un véhicule.

10. Générateur de gaz placé sur la courroie de support du harnais de sécurité (40) d'un véhicule, à l'intérieur d'un coussin de sécurité (39), pour gonfler ledit coussin de sécurité, caractérisé par:
— un corps (10) ayant la forme d'un réceptacle rectangulaire relativement mince et comportant plusieurs chambres de combustion (11, 12) de forme allongée, dont les axes longitudinaux sont situés dans un même plan et sont parallèles aux côtés dudit réceptacle rectangulaire ayant la plus grande dimension, chacune desdites chambres de combustion étant remplie d'un matériau générateur de gaz (38) et comprenant des écrans de filtrage de refroidissement, de réglage de pH (27, 29, 26); le corps (10) du générateur comportant en outre un détonateur (31) d'axe longitudinal situé dans le même plan que les axes longitudinaux des chambres de combustion (11, 12), le détonateur (31) jouxtant au moins deux chambres (11, 12) et communiquant effectivement avec chacune d'elles; chacune des deux chambres ayant une sortie (13, 14) pratiquée dans ledit corps du générateur, ladite sortie communiquant directement avec l'intérieur dudit coussin (39) pour le gonflage dudit coussin; et des moyens de mise à feu (34) pour ledit détonateur.

11. Ensemble selon la revendication 10, dans lequel les chambres de combustion (11, 12) sont des chambres doubles et où le détonateur (31) est logé au milieu, entre lesdites chambres doubles.

12. Ensemble selon l'une des revendications 10 ou 11, dans lequel ledit corps (10) comporte en outre un couvercle amovible (21) pour clore une extrémité desdites chambres (11, 12) et une extrémité de la chambre de détonateur (15) contenant ledit détonateur (31).

13. Ensemble selon l'une des revendications 10, 11 ou 12 comportant en outre des moyens (22a) pour monter ledit générateur dans ledit coussin de sécurité (39) lorsque l'on monte ledit générateur à l'intérieur dudit coussin sur ladite courroie de support (40).

14. Ensemble selon l'une des revendications 10 à 13, dans lequel chacune desdites chambres de combustion (11, 12) comporte une lumière allongée (19, 20) située parallèlement aux axes longitudinaux desdites chambres de combustion; dans lequel ledit détonateur (31) est un détonateur dont la mise à feu est électrique et comporte des fils (32) de connexion électrique pour la mise à feu; dans lequel ledit corps (10) comporte une chambre de détonateur (15) allongée, pour ledit détonateur (31), qui est située entre lesdites chambres de combustion et dont l'axe est, de ce fait, parallèle aux axes longitudinaux desdites chambres de combustion, ladite chambre de détonateur (15) comportant une lumière allongée (17, 18) sur chacun des côtés opposés, l'une desdites lumières (17) de la chambre du détonateur étant contiguë avec l'une desdites lumières (20) de la chambre de combustion et l'autre desdites lumières (18) de la chambre de détonateur étant contiguë avec l'autre lumière (19) de ladite chambre de combustion pour permettre la communication entre ladite chambre de détonateur et lesdites chambres de combustion; dans lequel ledit corps (10) comporte une plaque (21) pour fermer une extrémité des chambres de combustion et de la chambre de détonateur, les sorties (13, 14) de chacune desdites chambres de combustion étant situées à l'autre extrémité; dans lequel ledit corps (10) comporte une ouverture (16) à l'autre extrémité de la chambre de détonateur par laquelle les fils électriques de connexion (32) peuvent sortir dudit corps (10) pour être connectés auxdits moyens électriques.

**Patentansprüche**

1. Gasgenerator zum Aufblähen einer aufblähbaren Vorrichtung, wobei der Generator aus einem Gehäusekörper (10) besteht, der in einer Richtung relativ dünn ist und einen Zünder (31) aufnimmt, ferner aus einer Brennkammer (11), in der das entzündbare Gas erzeugende Treibmittel (38) angeordnet ist und einen Auslaß (13) aufweist, wobei der Zünder (31) mit einer Zündanordnung (34) versehen ist, dadurch gekennzeichnet, daß der Zünder (31) und die Brennkammer (11) im wesentlichen achsparallel nebeneinanderliegend in kommunizierender Verbindung (18) miteinander angeordnet sind, und daß die Brennkammer (11) eine Längsachse hat, die rechtwinklig zu der Richtung verläuft, in der der Gehäusekörper (10) relativ dünn ist.

2. Gasgenerator nach Anspruch 1, gekennzeichnet durch zwei Brennkammern (11, 12) in achsparalleler Anordnung neben dem Zünder (31), wobei der Zünder zwischen den und betriebsfähig in kommunizierender Verbindung mit den Brennkammern angeordnet ist, und die Längsachsen der Brennkammern (11, 12) und des Zünders (31) zueinander parallel verlaufen.

3. Gasgenerator nach Anspruch 2, dadurch gekennzeichnet, daß die Längsachsen der Brennkammern (11, 12) in einer gemeinsamen Ebene mit der Längsachse der den Zünder (31) enthaltenden Zündkammer (15) liegen, wobei die gemeinsame Ebene parallel zur Ebene der Oberfläche des Gehäusekörpers (10) verläuft, welche die dünne Dimension des Körpers definiert.

4. Gasgenerator nach Anspruch 2 oder 3, gekennzeichnet durch einen Filter (24, 25) in jeder der Brennkammern (11, 12) nächst dem Auslaß (13, 14).

5. Gasgenerator nach Anspruch 4, gekennzeichnet durch einen neutralisierenden Filter (26) in jeder der Brennkammern (11, 12) nächst dem Filter (24, 25).

6. Gasgenerator nach einem der Ansprüch 2 bis 5, dadurch gekennzeichnet, daß sowohl die Brennkammern (11, 12) als auch eine den Zünder (31) enthaltende Zündkammer (15) jeweils in Form einer zylindrischen Kammer ausgeführt und in einem gemeinsamen Gehäuse (10) enthalten sind.

7. Gasgenerator nach Anspruch 6, dadurch gekennzeichnet, daß der Gehäusekörper (10) eine die offenen Enden der Brennkammern (11, 12) und der Zündkammer (15) verschließende, abnehmbare Kappe (21) einschließt.

8. Gasgenerator nach einem der vorhergehenden Ansprüche in Kombination mit einer aus einem Sicherheitskissen (39) bestehenden aufblasbaren Vorrichtung, dadurch gekennzeichnet, daß der Generator als Ganzes innerhalb des Kissens angeordnet ist.

9. Gasgenerator mit einer Anordnung nach Anspruch 8, dadurch gekennzeichnet, daß diese an einem Haltegurt eines Mehrpunkt-Sicherheitsgurts (40) eines Fahrzeug-Sicherheitsgurtsystems befestigbar oder befestigt ist.

10. Gasgenerator in Anordnung an einem Haltegurt eines Mehrpunkt-Sicherheitsgurtes (40) eines Fahrzeug-Sicherheitsgurtsystems innerhalb eines Sicherheitskissens (39) für das Aufblasen des Sicherheitskissens, der Gasgenerator ist dadurch gekennzeichnet, daß der Gehäusekörper (10) in Form einer relativ dünnen, flachen, rechteckigen Packung ausgeführt ist und mehrere nebeneinanderliegende, längliche Brennkammern (11, 12) aufweist, deren Längsachsen in einer gemeinsamen Ebene liegen und sich im wesentlichen parallel zu den Seiten mit größerer Länge der rechteckigen Packung erstrecken, daß jede dieser Brennkammern mit gaserzeugendem Material gefüllt ist (38) und Siebfilter, Kühl- und pH-Justier-Siebfilter (27, 29, 26) enthält, daß der Generator-Gehäsekörper (10) ferner mit der Längsachse eines Zünders (31) in jener gemeinsamen Ebene liegt, in der die Längsachsen der Brennkammern (11, 12) verlaufen, daß der Zünder (31) dabei in Anordnung zwischen den und operativ in kommunizierender Verbindung mit zumindest zwei der Brennkammern (11, 12) angeordnet ist, und daß jede dieser Kammern mit einem in den Gehäusekörper eingeformten Auslaß (13, 14) in Verbindung steht, wobei der Auslaß dabei in direkter kommunizierender Verbindung mit dem Inneren des Kissens (39) für das Aufblasen des Kissens steht, und daß eine Zünd-Anordnung (34) für den Zünder (31) vorgesehen ist.

11. Gasgenerator mit einer Anordnung nach Anspruch (10), dadurch gekennzeichnet, daß die Brennkammern (11, 12) Doppelkammern sind, und der ZÜnder (31) mittig zwischen den Doppelkammern angeordnet ist.

12. Gasgenerator mit einer Anordnung nach Anspruch 10 oder 11, dadurch gekennzeichnet, daß der Gehäusekörper (10) eine sowohl die offenen Enden der Brennkammern (11, 12) als auch ein Ende der den Zünder (31) enthaltenden Zündkammer (15) verschliessende, abnehmbare Kappe (21) einschließt.

13. Gasgenerator mit einer Anordnung nach Anspruch 10, 11 oder 12, gekennzeichnet durch eine Anordnung (22a) für die Befestigung des Generators in dem Sicherheitskissen (39), wenn der Generator innerhalb des Kissens am Mehrpunkt-Sicherheitsgurt (40) plaziert wird.

14. Gasgenerator mit einer Anordnung nach einem der Ansprüche 10 bis 13, dadurch gekennzeichnet, daß jede der Brennkammern (11, 12) eine längliche Öffnung (19, 20) aufweist, die sich im wesentlichen parallel zu den Längsachsen der Brennkammern erstreckt, daß der Zünder (31) ein Zünder einer elektrisch aktivierbaren Type ist, der über elektrische Verbindungsleitungen (32) aktiviert wird, daß der Gehäusekörper (10) eine längliche Zündkammer (15) für den Zünder (31) aufweist, die zwischen den Brennkammern und mit deren Längsachse im wesentlichen parallel zu den Längsachsen der Brennkammern angeordnet ist, daß die Zündkammer (15) eine längliche Öffnung (17, 18) an gegenüberliegenden Seiten derselben aufweist, wobei die eine der Zündkammer-Öffnungen (17) mit der einen der Brennkammer-Öffnungen (20) überdeckt, und die andere der Zündkammer-Öffnungen (18) mit den anderen der Brennkammer-Öffnungen (19) überdeckt, welche zur kommunizierenden Verbindung zwischen der Zündkammer und den Brennkammern angeordnet sind, daß eine Platte (21) zum Verschließen eines Endes der Brenn- und Zündkammern vorhanden ist, wobei die Auslässe (13, 14) für jede der Brennkammern an den jeweils anderen Enden angeordnet sind, und daß ferner eine Öffnung (16) an dem anderen Ende der Zündkammer (15) angeordnet ist, durch welche die elektrischen Verbindungsleitungen (32) aus dem Körper (10) für die Verbindung mit der elektrischen Anordnung geführt sind.

FIG. 2

FIG. 1

0041 369

FIG. 3

FIG. 4

FIG. 5